# EUROPEAN PATENT APPLICATION

(11) **EP 4 270 349 A1**
(43) Date of publication of application: **01.11.2023**
(21) Application number: 21910100.3
(22) Date of filing: 24.11.2021
(51) Int. Cl.: G08B 21/22, G08B 25/04

(54) **VEHICLE OCCUPANT DETECTION DEVICE, AND EXECUTION TIMING CONTROL METHOD**

(30) Priority: 22.12.2020 JP 2020212663
(71) Applicant: MITSUMI ELECTRIC CO., LTD., Tama-Shi, Tokyo 206-8567 (JP)
(72) Inventor: SHIMIZU, Nobutaka, Tama-shi, Tokyo 206-8567 (JP); KOJIMA, Akihiko, Tama-shi, Tokyo 206-8567 (JP)
(74) Representative: Epping - Hermann - Fischer
(86) International application number: PCT/JP2021/042872
(87) International publication number: WO 2022/137947

(57) **Abstract**

The present invention suppresses the unnecessary detection of an occurence of a person being left behind in a vehicle. A vehicle occupant detection device (100) comprises: a distance detection unit (101) that detects the relative distance between a vehicle (200) and a first occupant; an occupant detection unit (102) that detects the presence/absence of a second occupant in the vehicle (200); and an execution timing controller (103) that, according to the detected relative distance, controls the execution timing of the detection operation by the occupant detection unit (102).

## Description

### Technical Field

The present invention relates to a vehicle occupant detection device and an execution timing control method.

### Background Art

In the related art, there have been cases of guardians leaving the child in a vehicle (for extended periods of time) and forgetting that the child is still present in the vehicle interior, resulting in serious health problems such as heat stroke.

Therefore, anti-leaving systems are increasingly installed in vehicles to detect and alert the driver that a child has been left unattended in the vehicle. In such systems, the presence or absence of a living body, such as a child, in the vehicle is detected with a trigger of an action of the guardian leaving the vehicle. When the presence of a living body is detected, an alarm such as a horn or hazard is sent to the outside of the vehicle, or a notification is made to the guardian via a smartphone or other devices.

For example, PTL 1 discloses an occupant state detection system that reports an alarm when a person is left in a vehicle. Specifically, the occupant state detection system detects whether an unattended state in which a person leaves the front seat (driver's seat or front occupant seat) has occurred, and when the system detects the occurrence of the unattended state and determines that an object in the detection area in the vehicle interior is a person, it outputs an alarm.

### Citation List

### Patent Literature

PTL1
Japanese Patent Application Laid-Open No. 2020-101415

### Summary of Invention

### Technical Problem

However, the technology described in PTL 1 has the problem in which the occurrence of leaving a person behind in a vehicle is unnecessarily detected with a trigger of the occurrence of an unattended state and consequently an alarm is output even when the driver is located near the vehicle such as when the driver (guardian) puts in or out a baggage after leaving the front seat and when the driver is frequently entering or leaving the vehicle to clean the vehicle.

An object of the present invention is to provide a vehicle occupant detection device and an execution timing control method that can suppress unnecessary detection of the occurrence of leaving behind in the vehicle.

### Solution to Problem

A vehicle occupant detection device according to the present invention includes a distance detection section configured to detect a relative distance of a vehicle and a first occupant; an occupant detection section configured to detect presence/absence of a second occupant in the vehicle; and an execution timing control section configured to control an execution timing of a detection operation at the occupant detection section in accordance with the relative distance detected.

An execution timing control method according to the present invention includes detecting a relative distance of a vehicle and a first occupant; and controlling an execution timing of a detection operation of an occupant detection section configured to detect presence/absence of a second occupant in the vehicle in accordance with the relative distance detected.

### Advantageous Effects of Invention

According to the present invention, it is possible to suppress unnecessary detection of the occurrence of leaving behind in the vehicle.

### Brief Description of Drawings

FIG. 1 is a block diagram illustrating an exemplary configuration of a vehicle occupant detection device in a first embodiment;
FIG. 2 is a flowchart illustrating an exemplary execution timing control operation in the first embodiment;
FIG. 3 is a block diagram illustrating an exemplary configuration of a vehicle occupant detection device in a second embodiment;
FIG. 4 is a flowchart illustrating an exemplary execution timing control operation in the second embodiment;
FIG. 5 is a block diagram illustrating an exemplary configuration of a vehicle occupant detection device in a third embodiment; and
FIG. 6 is a flowchart illustrating an exemplary execution timing control operation in the third embodiment.

### Description of Embodiments

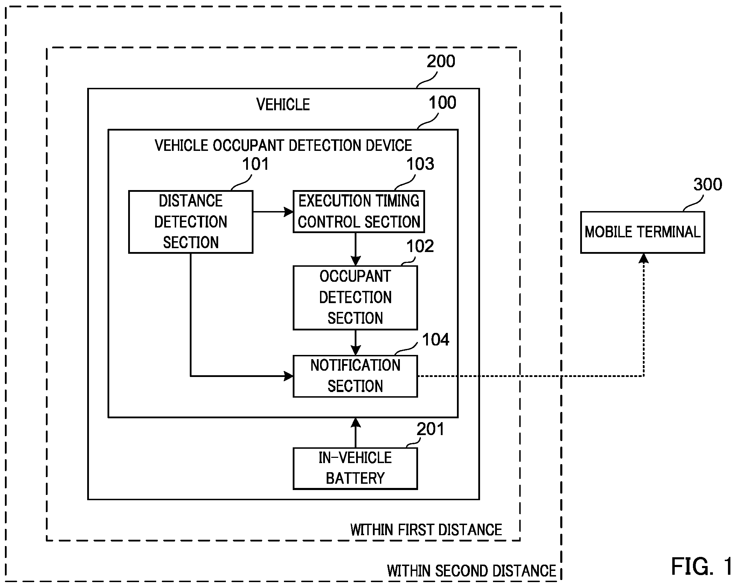

A first embodiment according to the present invention is described below with reference to the drawings. FIG. 1 is a block diagram illustrating an exemplary configuration of vehicle occupant detection device 100 in the first embodiment. Vehicle occupant detection device 100 is provided in vehicle 200, and detects the presence/absence of the child (corresponding to "second occupant" of the present invention) inside vehicle 200 (more specifically, vehicle interior). Vehicle 200 is an occupant car that can accommodate a plurality of occupants.

Typically, vehicle occupant detection device 100 is used for preventing the occurrence of the leaving behind of the child in the vehicle in which a guardian (corresponding to "first occupant" of the present invention) goes outside the vehicle leaving the child in the vehicle interior and forgetting that the child is still present in the vehicle interior in the state where the guardian and the child are in vehicle 200. The guardian is the driver of vehicle 200 or a family of the driver.

In the present embodiment, vehicle occupant detection device 100 operates with power supply from in-vehicle battery 201 mounted in vehicle 200. When vehicle 200 is running, in-vehicle battery 201 is charged in such a manner that the power generated by the internal combustion engine (engine) is input to the motor generator so as to operate the motor generator as a generator.

As illustrated in FIG. 1, vehicle occupant detection device 100 includes distance detection section 101, occupant detection section 102, execution timing control section 103 and notification section 104.

Although not illustrated in the drawings, vehicle occupant detection device 100 includes a CPU (Central Processing Unit) serving as a processor, a storage medium such as a ROM (Read Only Memory) for storing control programs, a working memory such as RAM (Random Access Memory), and a communication circuit, for example. In this case, the function of the above-mentioned each section is achieved when the CPU executes the control program.

Distance detection section 101 detects the relative distance of vehicle 200 and the guardian. Then, distance detection section 101 outputs relative distance information representing the detected relative distance to execution timing control section 103 and notification section 104.

In the present embodiment, distance detection section 101 includes radio equipment that performs radio communication with mobile terminal 300 (such as a smartphone and a smart key of vehicle 200) owned by the guardian. The radio equipment is not limited as long as it can perform radio communication with mobile terminal 300.

Distance detection section 101 detects the relative distance of vehicle 200 and mobile terminal 300, i.e., the relative distance of vehicle 200 and the guardian on the basis of the received intensity of the radio wave signal transmitted from mobile terminal 300 and received by the radio equipment. Distance detection section 101 detects the relative distance in such a manner that the stronger the received intensity of the radio wave signal received by the radio equipment, the shorter the relative distance of vehicle 200 and the guardian, and that the weaker the received intensity of the radio wave received by the radio equipment, the longer the relative distance of vehicle 200 and the guardian.

Note that distance detection section 101 may detect the relative distance of vehicle 200 and mobile terminal 300, i.e., the relative distance of vehicle 200 and the guardian on the basis of the time detected through the exchange of the wave signal between the mobile terminal 300 and the radio equipment (for example, the round-trip time of the radio wave signal between mobile terminal 300 and the radio equipment). In this case, distance detection section 101 detects the relative distance such that the shorter the time detected through the exchange of the wave signal between the mobile terminal 300 and the radio equipment, the shorter the relative distance of vehicle 200 and the guardian, and that the longer the time detected through the exchange of the wave signal between the mobile terminal 300 and the radio equipment, the longer the relative distance of vehicle 200 and the guardian.

In addition, in some cases, distance detection section 101 detects that mobile terminal 300 (or the guardian) is located inside vehicle 200 when the received intensity of the radio wave signal is a predetermined level or greater, or when the time detected through the exchange of the wave signal between the mobile terminal 300 and the radio equipment is a predetermined value or smaller. In this case, for example, the relative distance of vehicle 200 and mobile terminal 300 (or the guardian) is zero. When it is detected that mobile terminal 300 (or the guardian) is located outside vehicle 200, the relative distance has a positive value.

Passenger detection section 102 detects the presence/absence of the child inside vehicle 200. Passenger detection section 102 outputs detection presence/absence information representing the detected presence/absence of the child to notification section 104.

In the present embodiment, occupant detection section 102 detects the presence/absence of the child inside vehicle 200 by a detection method of capturing the state of the vehicle interior with an in-vehicle camera and recognizing the captured image, a detection method of transmitting radio waves with an ultrasonic sensor, a detection method of transmitting a radio wave with a radio wave sensor, a detection method of acquiring a detection value of a load sensor, a sound sensor or a vibration sensor installed inside the seat, or a detection method of acquiring a detection value of a pressure-sensitive sensor for detecting the pressure on the seat surface. Passenger detection section 102 is not limited as long as it can detect the presence/absence of an occupant such as a child inside vehicle 200.

For example, in the case of the detection method of transmitting a radio wave with a radio wave sensor, occupant detection section 102 includes a radio wave sensor and a signal processing device. The radio wave sensor is a radio wave type sensor attached in the vehicle interior, and is installed such that the rear seat is within the detection area, for example. The radio wave sensor transmits a radio wave (transmission wave) to the detection area inside the vehicle interior (for example, the area around the rear seat), receives a radio wave reflected by the object inside the detection area (reflection wave), and outputs a sensor signal corresponding to the object. The signal processing device is housed in the dashboard of vehicle 200, and receives the sensor signal output from the radio wave sensor, for example. The signal processing device processes the sensor signal received from the radio wave sensor to determine whether the object inside the detection area is a human (child). Passenger detection section 102 detects the presence/absence of the child inside vehicle 200 on the basis of the determination result of the signal processing device.

Execution timing control section 103 controls the execution timing of the detection operation at occupant detection section 102 in accordance with the relative distance represented by the relative distance information output from distance detection section 101. In the present embodiment, in the case where vehicle 200 is stopped, i.e., there is a possibility of occurrence of leaving behind of the child in the vehicle, execution timing control section 103 controls the execution timing of the detection operation at occupant detection section 102. Note that the case where vehicle 200 is stopped includes a case where the internal combustion engine (engine) is completely stopped by vehicle 200 during parking and the like, a case of so-called idling stop where vehicle 200 temporarily stops the internal combustion engine (engine) at a traffic light or under other conditions to reduce fuel consumption, and a case where the internal combustion engine (engine) is not stopped by vehicle 200.

In accordance with the relative distance represented by the relative distance information output from distance detection section 101, execution timing control section 103 causes occupant detection section 102 to execute the detection operation at a first execution timing (called active mode, for example), or a second execution timing (called sleep mode, for example) with a lower execution frequency than the first execution timing. The execution frequency refers to the number of detection operations executed per unit time, for example.

Execution timing control section 103 causes occupant detection section 102 to execute the detection operation at the first execution timing when the relative distance is longer than a first distance (for example, 5 m), whereas it causes the occupant detection section 102 to execute the detection operation at the second execution timing when the relative distance is equal to or smaller than the first distance. In the present embodiment, causing the occupant detection section 102 to execute the detection operation at the second execution timing means that the number of executions of the detection operation per unit time is zero, and that the detection operation is completely stopped.

The case where the relative distance is equal to or smaller than the first distance includes a case where the guardian having mobile terminal 300 is inside vehicle 200, a case where the guardian is located in or near vehicle 200 while opening the trunk to put in or out a baggage or frequently getting in or out of the vehicle 200 to clean it, and the like, for example. In such cases, the child is within sight for the guardian, and it is estimated that the leaving behind of the child in the vehicle has not occurred. In view of this, in the present embodiment, execution timing control section 103 suppresses the unnecessary detection of the occurrence of leaving behind inside vehicle 200 by causing the occupant detection section 102 to completely stop the detection operation. Furthermore, the power consumption can be suppressed by the amount of the stopped execution of the unnecessary detection operation at vehicle occupant detection device 100 that operates with the power supply received from in-vehicle battery 201.

Notification section 104 makes a notification of the detection of the presence of the child when the relative distance represented by the relative distance information output from distance detection section 101 is longer than a second distance, and the detection presence/absence information output from occupant detection section 102 indicates the presence of the child. The second distance is longer than the first distance, and is 20 to 30 m, for example. Examples of the case where the relative distance of vehicle 200 and the guardian is longer than the second distance include a case where leaving behind of the child in the vehicle has estimated to be actually occurred in which the guardian having mobile terminal 300 goes outside the vehicle leaving the child in the vehicle interior and forgetting that the child is still present in the vehicle interior.

In the present embodiment, notification section 104 makes a notification of the occurrence of leaving behind of the child in the vehicle by making a notification of the detection of the presence of the child to the guardian by means of mobile terminal 300. Note that notification section 104 may make a notification of the detection of the presence of the child inside vehicle 200 by, in accordance with the relative distance of vehicle 200 and the guardian, blinking the head light or tail light of vehicle 200, horning the horn of vehicle 200, or making a call to public institutions (e.g., police stations and child guidance centers).

When the relative distance is longer than the first distance and shorter than the second distance, occupant detection section 102 performs the operation of detecting the presence/absence of the child inside vehicle 200. On the other hand, notification section 104 stops the operation of notifying the detection of the presence of the child even when the detection presence/absence information output from occupant detection section 102 indicates the presence of the child. In this manner, when the presence of the child inside vehicle 200 is detected in the case where the relative distance is longer than the first distance and shorter than the second distance, notification section 104 can quickly make a notification of the detection of the presence of the child with a trigger of the fact that the relative distance of vehicle 200 and the guardian becomes longer than the second distance.

Note that distance detection section 101 may detect that the relative distance of vehicle 200 and the guardian is longer than the second distance when the reception of the radio wave signal sent from mobile terminal 300 is stopped (that is, the communication between mobile terminal 300 and the radio equipment is interrupted). In addition, the first distance and the second distance may be the same distance. In this case, notification section 104 makes a notification of the detection of the presence of the child when the relative distance represented by the relative distance information output from distance detection section 101 is longer than the first distance, and the detection presence/absence information output from occupant detection section 102 indicates the presence of the child. In this manner, the presence of the child is notified to the guardian at an earlier timing, and the leaving behind of the child in the vehicle can be prevented from actually occurring.

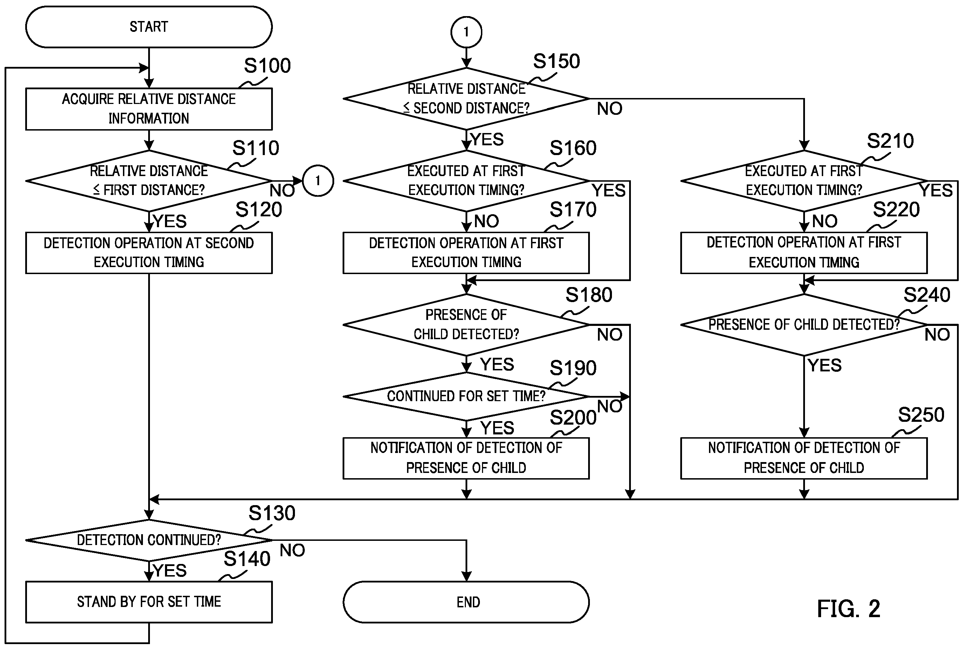

Next, with reference to the flowchart of FIG. 2, an exemplary execution timing control operation of vehicle occupant detection device 100 (corresponding to "execution timing control method" of the present invention) is described. Note that the process illustrated in FIG. 2 is executed when vehicle 200 is stopped.

First, execution timing control section 103 acquires the relative distance information output from distance detection section 101 (step S100). Next, execution timing control section 103 determines whether the relative distance represented by the relative distance information output from distance detection section 101 is not greater than the first distance (step S110). When it is determined that the relative distance is equal to or smaller than the first distance (step S110, YES), execution timing control section 103 causes the occupant detection section 102 to execute the detection operation at the second execution timing, i.e., causes occupant detection section 102 to completely stop the detection operation (step S120).

Next, vehicle occupant detection device 100 determines whether to continue the detection of the relative distance by distance detection section 101 (step S130). When it is determined that the detection of the relative distance by distance detection section 101 will not be continued (step S130, NO), vehicle occupant detection device 100 terminates the process in FIG. 2.

On the other hand, when the detection of the relative distance by distance detection section 101 will be continued (step S130, YES), vehicle occupant detection device 100 stands by for a predetermined time until the next detection timing of distance detection section 101 (step S140). Thereafter, the process is returned to the process before step S100.

Returning to the determination process of step S110, when the relative distance is not equal to or smaller than the first distance, i.e., longer than the first distance (step S110, NO), execution timing control section 103 determines whether the relative distance is not greater than the second distance (step S150).

When it is determined that the relative distance is equal to or smaller than the second distance (step S150, YES), execution timing control section 103 determines whether occupant detection section 102 is caused to execute the detection operation at the first execution timing (step S160). When it is determined that occupant detection section 102 is caused to execute the detection operation at the first execution timing (step S160, YES), the process is advanced to step S180. The reason for this is to suppress power consumption by stopping the execution of the unnecessary detection operation in vehicle occupant detection device 100 that operates with the power supply from in-vehicle battery 201 because the detection of the presence/absence of the child by occupant detection section 102 need only be performed one time.

On the other hand, when occupant detection section 102 is not caused to execute the detection operation at the first execution timing (step S160, NO), execution timing control section 103 causes occupant detection section 102 to execute the detection operation at the first execution timing (step S170). Next, notification section 104 determines whether the presence of the child has been detected by referring to the detection presence/absence information output from occupant detection section 102 (step S180).

When it is determined that the presence of the child has not been detected (step S180, NO), the process is advanced to step S130. On the other hand, when the presence of the child has been detected (step S180, YES), vehicle occupant detection device 100 determines whether it satisfies a condition that the relative distance detected by distance detection section 101 is continuously longer than the first distance and is equal to or smaller than the second distance for a predetermined time (for example, 10 minutes) (step S190).

When it is determined that the relative distance detected by distance detection section 101 does not satisfy the condition that it is continuously longer than the first distance and is equal to or smaller than the second distance for a predetermined time (step S190, NO), the process is advanced to step S130. On the other hand, when the relative distance detected by distance detection section 101 satisfies the condition that it is continuously longer than the first distance and is equal to or smaller than the second distance for a predetermined time (step S190, YES), notification section 104 makes a notification of the detection of the presence of the child (step S200). In this manner, even in the case where there is a risk that the time for which the guardian is outside the vehicle leaving the child in the vehicle interior is long and the guardian forgets that the child is still present in the vehicle interior, the guardian is notified of the presence of the child, and the leaving behind of the child in the vehicle can be prevented from actually occurring. Upon completion of the process of step S200, the process is advanced to step S130.

Returning to the determination process of step S150, when the relative distance is not equal to or smaller than the second distance, i.e., longer than the second distance (step S150, NO), execution timing control section 103 determines whether occupant detection section 102 is caused to execute the detection operation at the first execution timing (step S210). When it is determined that occupant detection section 102 is caused to execute the detection operation at the first execution timing (step S210, YES), the process is advanced to step S240. The reason for this is to suppress power consumption by stopping the execution of the unnecessary detection operation in vehicle occupant detection device 100 that operates with the power supply from in-vehicle battery 201 because the detection of the presence/absence of the child by occupant detection section 102 need only be performed one time.

On the other hand, when occupant detection section 102 is not caused to execute the detection operation at the first execution timing (step S210, NO), execution timing control section 103 causes occupant detection section 102 to execute the detection operation at the first execution timing (step S220).

Next, notification section 104 determines whether the presence of the child has been detected by referring to the detection presence/absence information output from occupant detection section 102 (step S240). When it is determined that the presence of the child has been detected (step S240, YES), notification section 104 makes a notification of the detection of the presence of the child (step S250). Upon completion of the process of step S250, the process is advanced to step S130. On the other hand, when the presence of the child has not been detected (step S240, NO), the process is advanced to step S130.

As described above, vehicle occupant detection device 100 of the first embodiment includes distance detection section 101 configured to detect the relative distance of vehicle 200 and the guardian (first occupant), occupant detection section 102 configured to detect the presence/absence of the child (second occupant) inside vehicle 200, and execution timing control section 103 configured to control the execution timing of the detection operation at occupant detection section 102 in accordance with the relative distance detected by distance detection section 101.

According to the present embodiment with the above-mentioned configuration, the execution timing of the detection operation at occupant detection section 102 is controlled in accordance with the relative distance of vehicle 200 and the guardian. Therefore, for example, when the relative distance of vehicle 200 and the guardian is short, i.e., the child is present within sight for the guardian, and it is estimated that leaving behind of the child in the vehicle has not occurred, the execution of unnecessary detection operation at occupant detection section 102 can be reduced. As a result, in in-vehicle battery 201 that supplies power to vehicle occupant detection device 100, unnecessary power consumption for the detection operation of occupant detection section 102 can be suppressed.

In addition, in the present embodiment, when vehicle 200 is stopped, execution timing control section 103 controls the execution timing of the detection operation at occupant detection section 102 in accordance with the detected relative distance. With this configuration, when vehicle 200 is not stopped, i.e., vehicle 200 is travelling and therefore there is no risk of the occurrence of leaving behind of the child in the vehicle, the execution of unnecessary detection operation at occupant detection section 102 can be reduced.

In addition, in the present embodiment, execution timing control section 103 causes occupant detection section 102 to execute the detection operation at the first execution timing when the relative distance is longer than the first distance, whereas it causes the occupant detection section 102 to execute the detection operation at the second execution timing with lower execution frequency than the first execution timing when the relative distance is shorter than the first distance. With this configuration, when the relative distance is shorter than the first distance, i.e., the child is present within sight for the guardian, and it is estimated that leaving behind of the child in the vehicle has not occurred, the detection operation of the occupant detection section 102 is executed at the second execution timing with lower execution frequency than the first execution timing. Thus, in comparison with the case where the detection operation of occupant detection section 102 is executed at the first execution timing regardless of the relative distance of vehicle 200 and the guardian, the execution of unnecessary detection operation at occupant detection section 102 can be reduced.

In addition, in the present embodiment, when the relative distance of vehicle 200 and the guardian is longer than the second distance, and the presence of the child is detected by occupant detection section 102, notification section 104 makes a notification of the detection of the presence of the child. With this configuration, when the relative distance is equal to or smaller than the second distance, i.e., the guardian is far from vehicle 200 to a certain degree, but it cannot be estimated that leaving behind of the child in the vehicle has occurred, unnecessary execution of the notification operation at notification section 104 can be suppressed. As a result, in in-vehicle battery 201 that supplies power to vehicle occupant detection device 100, unnecessary power consumption for the notification operation of notification section 104 can be suppressed.

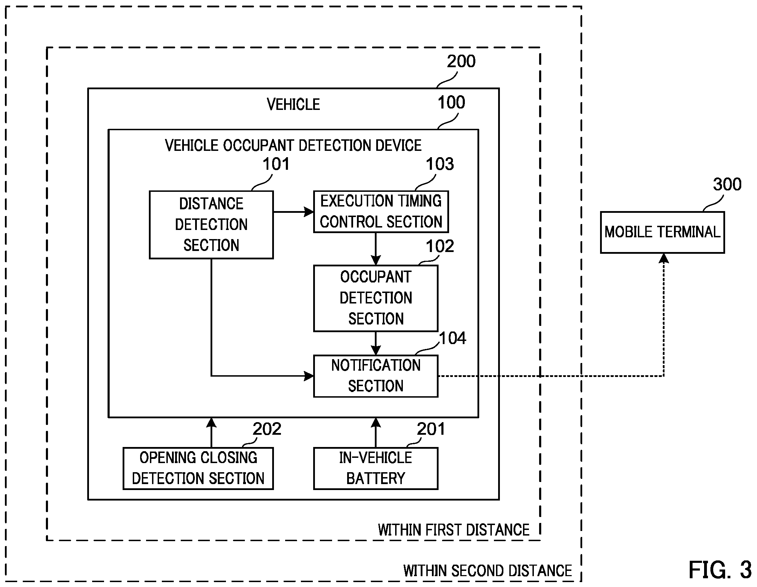

Next, a second embodiment according to the present invention is elaborated with reference to the drawings. FIG. 3 is a block diagram illustrating an exemplary configuration of vehicle occupant detection device 100 in the second embodiment. Note that the description of the same components as those of the first embodiment is omitted.

Vehicle occupant detection device 100 is used for preventing the occurrence of the leaving behind of the child in the vehicle in which the child gets into vehicle 200 with the doors unlocked without the guardian's knowledge, and the guardian is unaware of the child's presence in the vehicle interior in the state where the guardian and the child are outside vehicle 200.

As illustrated in FIG. 3, vehicle 200 further includes opening closing detection section 202 in comparison with vehicle 200 illustrated in FIG. 1.

Opening closing detection section 200 detects whether the door of vehicle 200 is open or closed. Then, opening closing detection section 202 outputs the state information representing whether the door of vehicle 200 is open or closed to execution timing control section 103 of vehicle occupant detection device 100. Execution timing control section 103 determines whether the door of vehicle 200 is open or closed on the basis of the state information representing whether the door is open or closed output from opening closing detection section 202. Note that "opening closing" herein means an action of opening the door and then closing the door, or an action of closing the door that has been left open.

Referring to the door state information output from opening closing detection section 202 and the relative distance information output from distance detection section 101, execution timing control section 103 causes occupant detection section 102 to execute the detection operation at the first execution timing when the opening/closing of the door of vehicle 200 is detected, and the relative distance of vehicle 200 and the guardian is longer than the first distance because then it is estimated that the child has entered vehicle 200 without the guardian's knowledge. On the other hand, when the opening/closing of the door of vehicle 200 has not been detected, execution timing control section 103 causes occupant detection section 102 to completely stop the detection operation regardless of the relative distance of vehicle 200 and the guardian because it is estimated that the child has not entered vehicle 200.

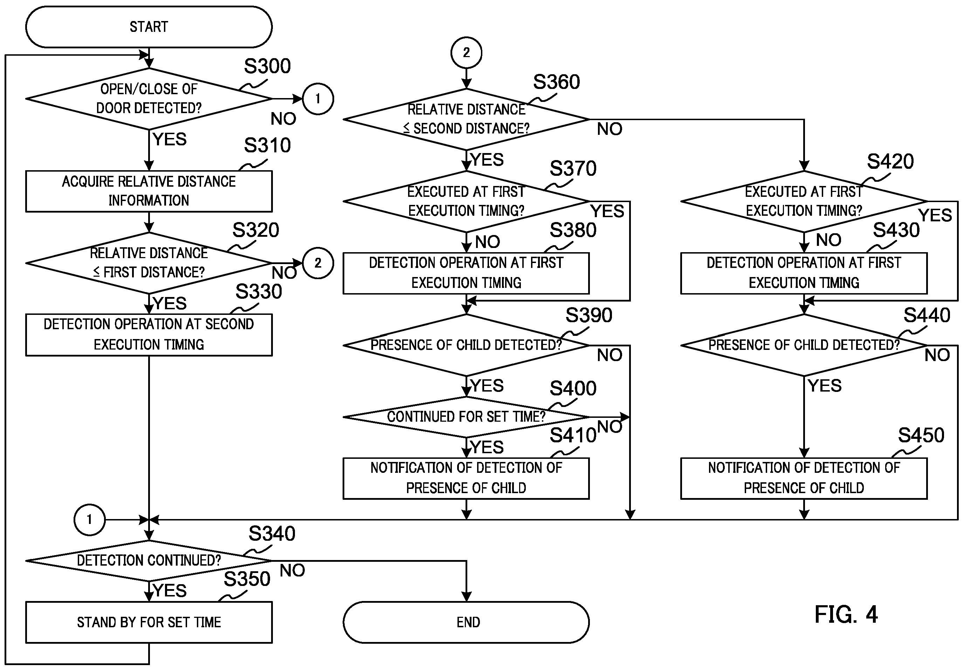

Next, with reference to the flowchart of FIG. 4, an exemplary execution timing control operation of vehicle occupant detection device 100 is described. Note that the process illustrated in FIG. 4 is executed when vehicle 200 is stopped.

First, execution timing control section 103 determines whether the opening/closing of the door of vehicle 200 has been detected on the basis of the door state information output from opening closing detection section 202 (step S300). When it is determined that the opening/closing of the door of vehicle 200 has not been detected (step S300, NO), it is estimated that the child has not entered vehicle 200, and therefore the process is advanced to step S340.

On the other hand, when the opening/closing of the door of vehicle 200 has been detected (step S300, YES), it is estimated that the child has entered vehicle 200, and therefore execution timing control section 103 acquires the relative distance information output from distance detection section 101 (step S310). Next, execution timing control section 103 determines whether the relative distance represented by the relative distance information output from distance detection section 101 is not greater than the first distance (step S320).

When it is determined that the relative distance is equal to or smaller than the first distance (step S320, YES), execution timing control section 103 causes the occupant detection section 102 to execute the detection operation at the second execution timing, i.e., causes occupant detection section 102 to completely stop the detection operation (step S330).

Next, vehicle occupant detection device 100 determines whether to continue the detection of the opening/closing of the door on the basis of the door state information output from opening closing detection section 202 (step S340). When it is determined that the detection of the opening/closing of the door will not be continued on the basis of the door state information output from opening closing detection section 202 (step S340, NO), vehicle occupant detection device 100 terminates the process in FIG. 4.

On the other hand, when the detection of the opening/closing of the door will be continued on the basis of the door state information output from opening closing detection section 202 (step S340, YES), vehicle occupant detection device 100 stands by for a predetermined time until the next detection timing of opening closing detection section 202 (step S350). Thereafter, the process is returned to the process before step S300.

Returning to the determination process of step S320, when the relative distance is not equal to or smaller than the first distance, i.e., longer than the first distance (step S320, NO), execution timing control section 103 determines whether the relative distance is not greater than the second distance (step S360).

When it is determined that the relative distance is equal to or smaller than the second distance (step S360, YES), execution timing control section 103 determines whether occupant detection section 102 is caused to execute the detection operation at the first execution timing (step S370). When it is determined that occupant detection section 102 is caused to execute the detection operation at the first execution timing (step S370, YES), the process is advanced to step S390. The reason for this is to suppress power consumption by stopping the execution of the unnecessary detection operation in vehicle occupant detection device 100 that operates with the power supply from in-vehicle battery 201 because the detection of the presence/absence of the child by occupant detection section 102 need only be performed one time.

On the other hand, when occupant detection section 102 is not caused to execute the detection operation at the first execution timing (step S370, NO), execution timing control section 103 causes occupant detection section 102 to execute the detection operation at the first execution timing (step S380). Next, notification section 104 determines whether the presence of the child has been detected by referring to the detection presence/absence information output from occupant detection section 102 (step S390).

When it is determined that the presence of the child has not been detected (step S390, NO), the process is advanced to step S340. On the other hand, when the presence of the child has been detected (step S390, YES), vehicle occupant detection device 100 determines whether it satisfies a condition that the relative distance detected by distance detection section 101 is continuously longer than the first distance and is equal to or smaller than the second distance for a predetermined time (for example, 10 minutes) (step S400).

When it is determined that the relative distance detected by distance detection section 101 does not satisfy the condition that it is continuously longer than the first distance and is equal to or smaller than the second distance for a predetermined time (step S400, NO), the process is advanced to step S340. On the other hand, when the relative distance detected by distance detection section 101 satisfies the condition that it is continuously longer than the first distance and is equal to or smaller than the second distance for a predetermined time (step S400, YES), notification section 104 makes a notification of the detection of the presence of the child (step S410). In this manner, even in the case where there is a risk that the child enters vehicle 200 without the guardian's knowledge and the guardian is unaware of the presence of the child in the vehicle interior for a long time, the guardian is notified of the presence of the child, and the leaving behind of the child in the vehicle can be prevented from actually occurring. Upon completion of the process of step S410, the process is advanced to step S340.

Returning to the determination process of step S360, when the relative distance is not equal to or smaller than the second distance, i.e., longer than the second distance (step S360, NO), execution timing control section 103 determines whether occupant detection section 102 is caused to execute the detection operation at the first execution timing (step S420). When it is determined that occupant detection section 102 is caused to execute the detection operation at the first execution timing (step S420, YES), the process is advanced to step S440. The reason for this is to suppress power consumption by stopping the execution of the unnecessary detection operation in vehicle occupant detection device 100 that operates with the power supply from in-vehicle battery 201 because the detection of the presence/absence of the child by occupant detection section 102 need only be performed one time.

On the other hand, when occupant detection section 102 is not caused to execute the detection operation at the first execution timing (step S420, NO), execution timing control section 103 causes occupant detection section 102 to execute the detection operation at the first execution timing (step S430).

Next, notification section 104 determines whether the presence of the child has been detected by referring to the detection presence/absence information output from occupant detection section 102 (step S440). When it is determined that the presence of the child has been detected (step S440, YES), notification section 104 makes a notification of the detection of the presence of the child (step S450). Upon completion of the process of step S450, the process is advanced to step S340. On the other hand, when the presence of the child has not been detected (step S440, NO), the process is advanced to step S340.

According to the second embodiment having the above-mentioned configuration, when the opening/closing of the door of vehicle 200 has been detected on the basis of the door state information output from opening closing detection section 202, the execution timing of the detection operation at occupant detection section 102 is controlled in accordance with the relative distance of vehicle 200 and the guardian. Therefore, for example, when the relative distance of vehicle 200 and the guardian is short, i.e., the child is present within sight for the guardian, and it is estimated that leaving behind of the child in the vehicle has not occurred, the execution of unnecessary detection operation at occupant detection section 102 can be reduced. As a result, in in-vehicle battery 201 that supplies power to vehicle occupant detection device 100, unnecessary power consumption for the detection operation of occupant detection section 102 can be suppressed.

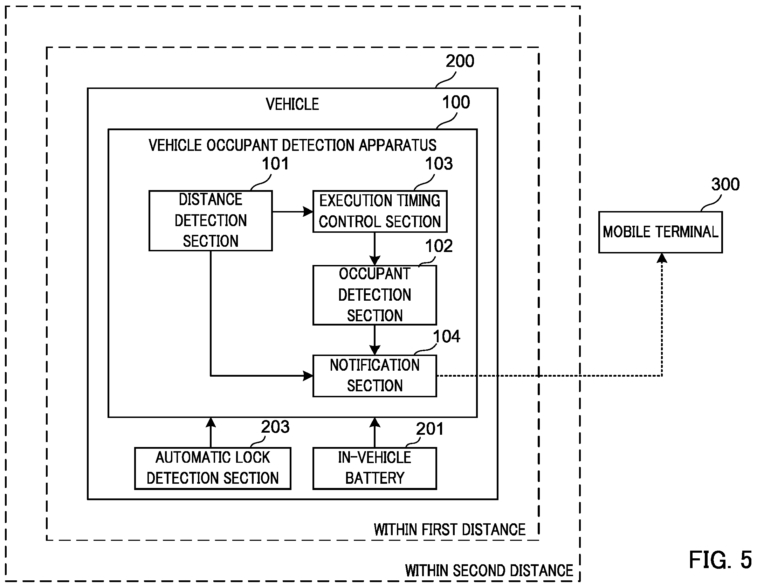

Next, a third embodiment according to the present invention is elaborated with reference to the drawings. FIG. 5 is a block diagram illustrating an exemplary configuration of vehicle occupant detection device 100 in the third embodiment. Note that the description of the same components as those of the first embodiment is omitted.

As in the second embodiment, vehicle occupant detection device 100 is used for preventing the occurrence of the leaving behind of the child in the vehicle in which the child gets into vehicle 200 with the doors unlocked without the guardian's knowledge, and the guardian is unaware of the child's presence in the vehicle interior in the state where the guardian and the child are outside vehicle 200.

As illustrated in FIG. 5, vehicle 200 further includes automatic lock detection section 203 in comparison with vehicle 200 illustrated in FIG. 1.

Automatic lock detection section 203 detects the presence/absence of the occurrence of automatic lock at the door of vehicle 200. Then, automatic lock detection section 203 outputs automatic lock presence/absence information representing the presence/absence of the occurrence of automatic lock to execution timing control section 103. Here, the automatic lock at the door of vehicle 200 is execution of a control of automatically locking the door at a timing of an elapse of a predetermined time after the door is closed.

Referring to the automatic lock presence/absence information output from automatic lock detection section 203 and the relative distance information output from distance detection section 101, execution timing control section 103 causes occupant detection section 102 to execute the detection operation at the first execution timing when the occurrence of the automatic lock has been detected, and the relative distance of vehicle 200 and the guardian is longer than the first distance because then it is estimated that the child has entered vehicle 200 without the guardian's knowledge. On the other hand, when the occurrence of the automatic lock has not been detected, execution timing control section 103 causes occupant detection section 102 to completely stop the detection operation regardless of the relative distance of vehicle 200 and the guardian because it is estimated that the child has not entered vehicle 200.

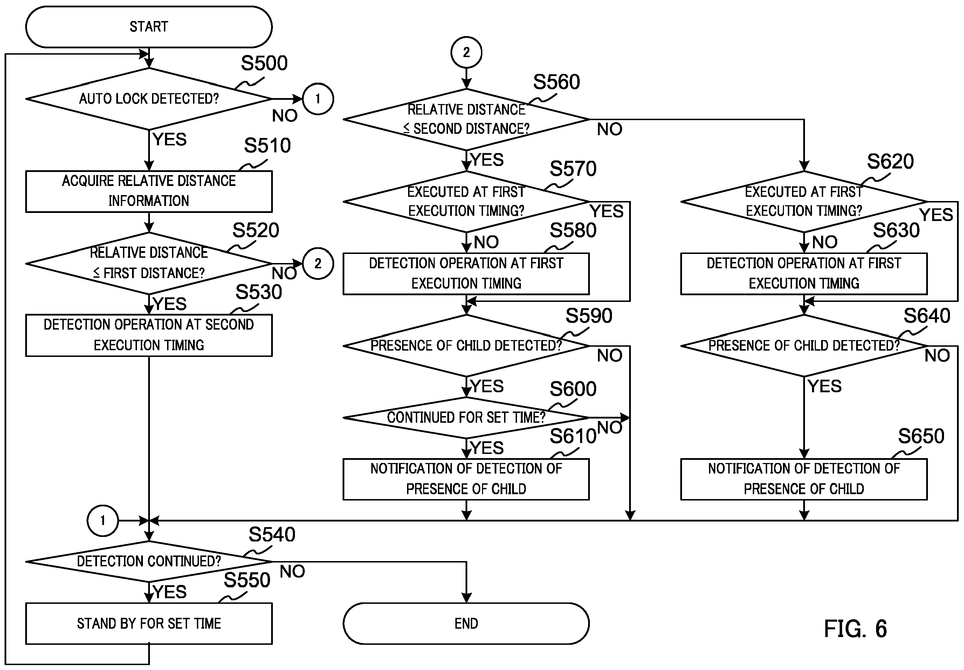

Next, with reference to the flowchart of FIG. 6, an exemplary execution timing control operation of vehicle occupant detection device 100 is described. Note that the process illustrated in FIG. 6 is executed when vehicle 200 is stopped.

First, execution timing control section 103 determines whether the occurrence of the automatic lock is detected by automatic lock detection section 203 (step S500). When it is determined that the occurrence of the automatic lock has not been detected (step S500, NO), it is estimated that the child has not entered vehicle 200, and therefore the process is advanced to step S540.

On the other hand, when the occurrence of the automatic lock has been detected (step S500, YES), it is estimated that the child has entered vehicle 200, execution timing control section 103 acquires the relative distance information output from distance detection section 101 (step S510). Next, execution timing control section 103 determines whether the relative distance represented by the relative distance information output from distance detection section 101 is not greater than the first distance (step S520).

When it is determined that the relative distance is equal to or smaller than the first distance (step S520, YES), execution timing control section 103 causes the occupant detection section 102 to execute the detection operation at the second execution timing, i.e., causes occupant detection section 102 to completely stop the detection operation (step S530).

Next, vehicle occupant detection device 100 determines whether to continue the detection of the occurrence of automatic lock by automatic lock detection section 203 (step S540). When it is determined that the detection of the occurrence of automatic lock by automatic lock detection section 203 will not be continued (step S540, NO), vehicle occupant detection device 100 terminates the process in FIG. 6.

On the other hand, when the detection of the occurrence of automatic lock by automatic lock detection section 203 will be continued (step S540, YES), vehicle occupant detection device 100 stands by for a predetermined time until the next detection timing of automatic lock detection section 203 (step S550). Thereafter, the process is returned to the process before step S500.

Returning to the determination process of step S520, when the relative distance is not equal to or smaller than the first distance, i.e., longer than the first distance (step S520, NO), execution timing control section 103 determines whether the relative distance is not greater than the second distance (step S560).

When it is determined that the relative distance is equal to or smaller than the second distance (step S560, YES), execution timing control section 103 determines whether occupant detection section 102 is caused to execute the detection operation at the first execution timing (step S570). When it is determined that occupant detection section 102 is caused to execute the detection operation at the first execution timing (step S570, YES), the process is advanced to step S590. The reason for this is to suppress power consumption by stopping the execution of the unnecessary detection operation in vehicle occupant detection device 100 that operates with the power supply from in-vehicle battery 201 because the detection of the presence/absence of the child by occupant detection section 102 need only be performed one time.

On the other hand, when occupant detection section 102 is not caused to execute the detection operation at the first execution timing (step S570, NO), execution timing control section 103 causes occupant detection section 102 to execute the detection operation at the first execution timing (step S580). Next, notification section 104 determines whether the presence of the child has been detected by referring to the detection presence/absence information output from occupant detection section 102 (step S590).

When it is determined that the presence of the child has not been detected (step S590, NO), the process is advanced to step S540. On the other hand, when the presence of the child has been detected (step S590, YES), vehicle occupant detection device 100 determines whether it satisfies a condition that the relative distance detected by distance detection section 101 is continuously longer than the first distance and is equal to or smaller than the second distance for a predetermined time (for example, 10 minutes) (step S600).

When it is determined that the relative distance detected by distance detection section 101 does not satisfy the condition that it is continuously longer than the first distance and is equal to or smaller than the second distance for a predetermined time (step S600, NO), the process is advanced to step S540. On the other hand, when the relative distance detected by distance detection section 101 satisfies the condition that it is continuously longer than the first distance and is equal to or smaller than the second distance for a predetermined time (step S600, YES), notification section 104 makes a notification of the detection of the presence of the child (step S610). In this manner, even in the case where there is a risk that the child enters vehicle 200 without the guardian's knowledge and the guardian is unaware of the presence of the child in the vehicle interior for a long time, the guardian is notified of the presence of the child, and the leaving behind of the child in the vehicle can be prevented from actually occurring. Upon completion of the process of step S610, the process is advanced to step S540.

Returning to the determination process of step S560, when the relative distance is not equal to or smaller than the second distance, i.e., longer than the second distance (step S560, NO), execution timing control section 103 determines whether occupant detection section 102 is caused to execute the detection operation at the first execution timing (step S620). When it is determined that occupant detection section 102 is caused to execute the detection operation at the first execution timing (step S620, YES), the process is advanced to step S640. The reason for this is to suppress power consumption by stopping the execution of the unnecessary detection operation in vehicle occupant detection device 100 that operates with the power supply from in-vehicle battery 201 because the detection of the presence/absence of the child by occupant detection section 102 need only be performed one time.

On the other hand, when occupant detection section 102 is not caused to execute the detection operation at the first execution timing (step S620, NO), execution timing control section 103 causes occupant detection section 102 to execute the detection operation at the first execution timing (step S630).

Next, notification section 104 determines whether the presence of the child has been detected by referring to the detection presence/absence information output from occupant detection section 102 (step S640). When it is determined that the presence of the child has been detected (step S640, YES), notification section 104 makes a notification of the detection of the presence of the child (step S650). Upon completion of the process of step S650, the process is advanced to step S540. On the other hand, when the presence of the child has not been detected (step S640, NO), the process is advanced to step S540.

According to the third embodiment having the above-mentioned configuration, when the occurrence of the automatic lock is detected by automatic lock detection section 203, the execution timing of the detection operation at occupant detection section 102 is controlled in accordance with the relative distance of vehicle 200 and the guardian. Therefore, for example, when the relative distance of vehicle 200 and the guardian is short, i.e., the child is present within sight for the guardian, and it is estimated that leaving behind of the child in the vehicle has not occurred, the execution of unnecessary detection operation at occupant detection section 102 can be reduced. As a result, in in-vehicle battery 201 that supplies power to vehicle occupant detection device 100, unnecessary power consumption for the detection operation of occupant detection section 102 can be suppressed.

Note that in the above-mentioned first to third embodiments, distance detection section 101 detects the relative distance of vehicle 200 and the guardian on the basis of the radio communication state (for example, reception strength) between mobile terminal 300 owned by the guardian and the radio equipment, but the present invention is not limited to this. For example, distance detection section 101 may capture the state of the outside of the vehicle interior with a vehicle outside camera and recognize the captured image to detect the relative distance of the guardian and vehicle 200 included in the image.

In addition, in the above-mentioned first to third embodiments, when vehicle 200 is stopped, execution timing control section 103 controls the execution timing of the detection operation at occupant detection section 102 in accordance with the relative distance detected by distance detection section 101, but the present invention is not limited to this. For example, execution timing control section 103 may control the execution timing of the detection operation at occupant detection section 102 in accordance with the detected relative distance regardless of whether vehicle 200 is stopped.

In addition, in the above-mentioned first to third embodiments, execution timing control section 103 causes occupant detection section 102 to execute the detection operation at the two different execution timings (the first execution timing and the second execution timing) differing in execution frequency in accordance with the relative distance of vehicle 200 and the guardian, but the present invention is not limited to this. For example, execution timing control section 103 may cause occupant detection section 102 to execute the detection operation at three or more execution timings differing in execution frequency in accordance with the relative distance of vehicle 200 and the guardian. In this case, execution timing control section 103 may cause occupant detection section 102 to execute the detection operation at an execution timing with which the execution frequency increases stepwise as the relative distance of vehicle 200 and the guardian increases.

In addition, in the above-mentioned first to third embodiments, causing the occupant detection section 102 to execute the detection operation at the second execution timing means that the number of executions of the detection operation per unit time is zero, and that the detection operation is completely stopped, but the present invention is not limited to this. In short, it suffices that the execution frequency of the second execution timing is smaller than that of the first execution timing, and the detection operation may not be completely stopped by setting the number of executions of the detection operation per unit time to one time or more.

In addition, in the above-mentioned first to third embodiments, there is one mobile terminal 300, i.e., one guardian, but the present invention is not limited to this. It may be applied to a plurality of guardians, e.g., a driver and his/her two family members. In this case, distance detection section 101 includes radio equipment for radio communication with a plurality of mobile terminals 300 owned by the plurality of guardians, and detects the relative distances of vehicle 200 and the plurality of mobile terminals 300, i.e., the relative distances of vehicle 200 and the plurality of guardians.

Then, execution timing control section 103 causes occupant detection section 102 to execute the detection operation at the first execution timing when all of the plurality of relative distances detected by distance detection section 101 are longer than the first distance, whereas it causes the occupant detection section 102 to execute the detection operation at the second execution timing with lower execution frequency than the first execution timing when any one of the plurality of relative distances is equal to or smaller than the first distance. In this manner, when any one of the plurality of relative distances is equal to or smaller than the first distance, i.e., the child is present within sight for at least one guardian, and it is estimated that leaving behind of the child in the vehicle has not occurred, the detection operation of occupant detection section 102 is executed at the second execution timing. Therefore, also in the case where any one of the plurality of relative distances is equal to or smaller than the first distance, the execution of unnecessary detection operation at occupant detection section 102 can be reduced in comparison with the case where the detection operation of occupant detection section 102 is executed at the first execution timing.

In addition, when all of the plurality of relative distances detected by distance detection section 101 is longer than the second distance, and the presence of the child is detected by occupant detection section 102, notification section 104 makes a notification of the detection of the presence of the child. In this manner, when any one of the plurality of relative distances is equal to or smaller than the second distance, i.e., the guardian is far from vehicle 200 to a certain degree, but it cannot be estimated that leaving behind of the child in the vehicle has occurred, the operation of notifying the presence of the child is not executed even when the presence of the child is detected. Thus, in comparison with the case where the notification operation of notification section 104 is executed also when any one of the plurality of relative distances is equal to or smaller than the second distance, unnecessary execution of the notification operation of notification section 104 can be suppressed.

The above-mentioned embodiments are merely examples of embodiments for implementing the invention, and the technical scope of the invention should not be interpreted as limited by them. In other words, the invention can be implemented in various forms without deviating from its gist or its main features.

This application is entitled to and claims the benefit of Japanese Patent Application No. 2020-212663 filed on December 22, 2020, the disclosure each of which including the specification, drawings and abstract is incorporated herein by reference in its entirety.

### Reference Signs List

100 Vehicle occupant detection device
101 Distance detection section
102 Passenger detection section
103 Execution timing control section
104 Notification section
200 Vehicle
201 In-vehicle battery
202 Opening closing detection section
203 Automatic lock detection section
300 Mobile terminal

## Claims

1. A vehicle occupant detection device comprising:
a distance detection section configured to detect a relative distance of a vehicle and a first occupant;
an occupant detection section configured to detect presence/absence of a second occupant in the vehicle; and
an execution timing control section configured to control an execution timing of a detection operation at the occupant detection section in accordance with the relative distance detected.

2. The vehicle occupant detection device according to claim 1, wherein the execution timing control section controls the execution timing of the detection operation at the occupant detection section when the vehicle is stopped.

3. The vehicle occupant detection device according to claim 1, wherein the execution timing control section causes the occupant detection section to execute the detection operation at a first execution timing, or a second execution timing with lower execution frequency than the first execution timing in accordance with the relative distance.

4. The vehicle occupant detection device according to claim 3,
wherein when the relative distance is longer than the first distance, the execution timing control section causes the occupant detection section to execute the detection operation at the first execution timing, and
wherein when the relative distance is shorter than the first distance, the execution timing control section causes the occupant detection section to execute the detection operation at the second execution timing.

5. The vehicle occupant detection device according to claim 4, wherein the execution timing control section causes the occupant detection section to execute the detection operation at the first execution timing when an opening/closing state of a door of the vehicle is detected by an opening closing detection section, and the relative distance is longer than the first distance.

6. The vehicle occupant detection device according to claim 4, wherein the execution timing control section causes the occupant detection section to execute the detection operation at the first execution timing when an automatic lock of a door of the vehicle is detected by an automatic lock detection section, and the relative distance is longer than the first distance.

7. The vehicle occupant detection device according to claim 4, further comprising a notification section configured to make a notification that presence of the second occupant is detected when the relative distance is longer than a second distance that is equal to or longer than the first distance, and presence of the second occupant is detected.

8. The vehicle occupant detection device according to claim 4, further comprising a notification section configured to make a notification that presence of the second occupant is detected when the relative distance is continuously longer than the first distance and shorter than a second distance for a predetermined time in a case where presence of the second occupant is detected.

9. An execution timing control method comprising:
detecting a relative distance of a vehicle and a first occupant; and
controlling an execution timing of a detection operation of an occupant detection section configured to detect presence/absence of a second occupant in the vehicle in accordance with the relative distance detected.
